# EUROPEAN PATENT APPLICATION

(11) **EP 4 383 621 A1**
(43) Date of publication of application: **12.06.2024**
(21) Application number: 22851944.3
(22) Date of filing: 25.07.2022
(51) Int. Cl.: H04L 5/00

(54) **CONTROL SIGNALING MONITORING METHOD AND APPARATUS, DEVICE, AND STORAGE MEDIUM**

(30) Priority: 06.08.2021 CN 202110904524
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); ZHANG, Yinghao, Beijing 100085 (CN)
(74) Representative: Studio Torta S.p.A.
(86) International application number: PCT/CN2022/107585
(87) International publication number: WO 2023/011230

(57) **Abstract**

The present disclosure provides a control signaling monitoring method, an apparatus, a device, and a storage medium. A user equipment receives first configuration information sent by a network device, the first configuration information being used to determine N groups of candidate parameter sets, and obtains a target parameter set of a target DRX from the N groups of candidate parameter sets according to indication information sent by the network device, the target parameter set being used to determine a monitoring time period of control signaling. In this solution, the control signaling monitoring time can be dynamically determined according to the target parameter set of the DRX, such that the alignment probability of a data packet transmission process and the monitoring time is increased, and data packet transmission delay is reduced.

## Description

This disclosure claims priority to Chinese patent application No. 202110904524.3, filed with the China National Intellectual Property Administration on August 6, 2021 and entitled "Control Signaling Monitoring Method, Apparatus, Device and Storage Medium", which is hereby incorporated by reference in its entirety.

### TECHNICAL FIELD

The present disclosure relates to the field of communication technology and, in particular, to a control signaling monitoring method, an apparatus, a device and a storage medium.

### BACKGROUND

With the advent of the 5G era, higher requirements have been put forward for a data transmission process. During the data transmission process, a user equipment (User Equipment, UE) needs to always monitor a physical downlink control channel (Physical Downlink Control Channel, PDCCH), and send and receive data according to an indication message sent by a network side, which results in relatively large power consumption of the UE and relatively large delay of data transmission.

In the related art, in order to improve timeliness and energy saving of the data transmission process, a discontinuous reception (Discontinuous Reception, DRX) mechanism is introduced in a long term evolution (Long Term Evolution, LTE) system, that is, during a DRX cycle, the UE only monitors a PDCCH signaling within an activation period (On duration), and the UE does not receive other PDCCH signaling except a scheduling broadcast signaling within a non-activation period (DRX off) to reduce power consumption.

However, in the above-mentioned data transmission process, a data packet to be transmitted often goes through encoding, network routing and other links before reaching a network device. During this process, some random delay jitter (jitter) may be generated, resulting in data transmission delay.

### SUMMARY

The present disclosure provides a control signaling monitoring method, an apparatus, a device and a storage medium to solve the technical problem of data transmission delay.

In a first aspect, the present disclosure provides a control signaling monitoring method, which is applied to a user equipment and includes: receiving first configuration information sent by a network device, where the first configuration information is used to determine N groups of candidate parameter sets, where N is an integer greater than or equal to 1; obtaining a target parameter set of a target DRX from the N groups of candidate parameter sets according to indication information sent by the network device, where the target parameter set is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets, or a threshold value corresponding to a time interval between received service data packets.

In some optional implementations, the obtaining the target parameter set of the target DRX from the N groups of candidate parameter sets includes: determining at least one target DRX cycle according to a target parameter set; determining a target parameter set of the at least one target DRX cycle.

In some optional implementations, the target parameter set includes M target parameters, and the M target parameters at least include a DRX cycle time offset value.

In some optional implementations, the first configuration information includes: N groups of candidate parameter sets or a related parameter of N groups of candidate parameter sets, and the related parameter is used to determine the N groups of candidate parameter sets.

In some optional implementations, when a preset condition is determined to be met, the target parameter set of the target DRX cycle is switched to a preset parameter set.

In some optional implementations, the preset condition is determined to be met when at least one of the following situations is met: one or more situations of a beam failure recovery, a radio link failure or user equipment out-of-sync occur when sending service data; preference information is reported to the network device, and the preference information is used to indicate to update the target parameter set to the preset parameter set; the target indication signaling fails to be received; a target service data transmission is completed; a rollback timer expires, and the rollback timer is used to indicate to update the target parameter set to the preset parameter set; the user equipment receives an RRC reconfiguration message sent by the network device, and the RRC reconfiguration message is used to modify the target parameter set of the target DRX cycle.

In a second aspect, an embodiment of the present disclosure provides a control signaling monitoring method, which is applied to a network device and includes: sending first configuration information to a user equipment, where the first configuration information is used to determine N groups of candidate parameter sets, where N is an integer greater than or equal to 1; sending indication information to the user equipment, where the indication information is used to indicate to obtain a target parameter set of a target DRX from the N groups of candidate parameter sets, and the target parameter is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, sending the first configuration information to the user equipment further includes: determining the first configuration information according to an original DRX cycle of the user equipment, where the first configuration information includes: N groups of candidate parameter sets or a related parameter of N groups of candidate parameter sets, and the related parameter is used to determine the N groups of candidate parameter sets.

In a third aspect, an embodiment of the present disclosure provides a control signaling monitoring apparatus, which is applied to a user equipment and includes:
a receiving module, configured to receive first configuration information sent by a network device, where the first configuration information is used to determine N groups of candidate parameter sets, where N is an integer greater than or equal to 1;
an obtaining module, configured to obtain a target parameter set of a target DRX from the N groups of candidate parameter sets according to indication information sent by the network device, where the target parameter set is used to determine a control signaling monitoring time.

In a fourth aspect, an embodiment of the present disclosure provides a control signaling monitoring apparatus, which is applied to a network device and includes: a sending module, configured to send first configuration information to a user equipment, where the first configuration information is used to determine N groups of candidate parameter sets, where N is an integer greater than or equal to 1; send indication information to the user equipment, where the indication information is used to indicate to obtain a target parameter set of a target DRX from the N groups of candidate parameter sets, and the target parameter is used to determine a control signaling monitoring time.

In a fourth aspect, an embodiment of the present disclosure provides a user equipment, including:
a memory, configured to store a computer program;
a transceiver, configured to send and receive data under control of a processor;
the processor, configured to read the computer program in the memory and perform the following operations:
   receiving first configuration information sent by a network device, where the first configuration information is used to determine N groups of candidate parameter sets, where N is an integer greater than or equal to 1;
   obtaining a target parameter set of a target DRX from the N groups of candidate parameter sets according to indication information sent by the network device, where the target parameter set is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, obtaining the target parameter set of the target DRX from the N groups of candidate parameter sets includes: determining at least one target DRX cycle according to a target parameter set; determining a target parameter set of the at least one target DRX cycle.

In some optional implementations, the target parameter set includes M target parameters, and the M target parameters at least include a DRX cycle time offset value.

In some optional implementations, the first configuration information includes: N groups of candidate parameter sets or a related parameter of N groups of candidate parameter sets, and the related parameter is used to determine the N groups of candidate parameter sets.

In some optional implementations, when a preset condition is determined to be met, the target parameter set of the target DRX cycle is switched to a preset parameter set.

In some optional implementations, the preset condition is determined to be met when at least one of the following situations is met: one or more situations of a beam failure recovery, a radio link failure or user equipment out-of-sync occur when sending service data; preference information is reported to the network device, and the preference information is used to indicate to update the target parameter set to the preset parameter set; the target indication signaling fails to be received; a target service data transmission is completed; a rollback timer expires, and the rollback timer is used to indicate to update the target parameter set to the preset parameter set; the user equipment receives a RRC reconfiguration message sent by the network device, and the RRC reconfiguration message is used to modify the target parameter set of the target DRX cycle.

In a sixth aspect, an embodiment of the present disclosure provides a network device, including:
a memory, configured to store a computer program;
a transceiver, configured to send and receive data under control of a processor;
the processor, configured to read the computer program in the memory and perform the following operations:
   sending first configuration information to a user equipment, where the first configuration information is used to determine N groups of candidate parameter sets, where N is an integer greater than or equal to 1; sending indication information to the user equipment, where the indication information is used to indicate to obtain a target parameter set of a target DRX from the N groups of candidate parameter sets, and the target parameter is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, the processor is further configured to perform the following operations: determining the first configuration information according to an original DRX cycle of the user equipment, where the first configuration information includes: N groups of candidate parameter sets or a related parameter of N groups of candidate parameter sets, and the related parameter is used to determine the N groups of candidate parameter sets.

In a seventh aspect, an embodiment of the present disclosure provides a processor-readable storage medium, where the processor-readable storage medium stores a computer program, and the computer program is used to cause a processor to execute the control signaling monitoring method in any one of the first aspect and/or the second aspect.

In an eighth aspect, an embodiment of the present disclosure provides a computer program product including a computer program, and when the computer program is executed by a processor, the control signaling monitoring method in any one of the first aspect and/or the second aspect is implemented.

In the control signaling monitoring method, apparatus, device and storage medium provided by the present disclosure, the first configuration information sent by the network device is received, and the first configuration information is used to determine the N groups of candidate parameter sets; the target parameter set of the target DRX is obtained from the N groups of candidate parameter sets according to the indication information sent by the network device, and the target parameter set is used to determine the control signaling monitoring time. In this solution, the control signaling monitoring time can be dynamically determined according to the target parameter set of the DRX, such that the alignment probability of the data packet transmission process and the monitoring time is increased, and data packet transmission delay is reduced.

It should be understood that the content described in the above Summary section is not intended to define key or important features of the embodiments of the present disclosure, nor is it used to limit the scope of the present disclosure.

Other features of the present disclosure will become easy to understand from the description below.

### BRIEF DESCRIPTION OF DRAWINGS

In order to explain the technical solutions in the present disclosure or in the prior art more clearly, the drawings needed to be used in the description of embodiments or the prior art will be briefly introduced below. Obviously, the drawings in the following description are some embodiments of the present disclosure. For those of ordinary skills in the art, other drawings may be obtained from these drawings without paying creative efforts.
FIG. 1 is a schematic diagram of an application scenario provided by an embodiment of the present disclosure.
FIG. 2 is schematic diagram 1 of signaling interaction of a control signaling monitoring method provided by an embodiment of the present disclosure.
FIG. 3 is schematic diagram 2 of signaling interaction of a control signaling monitoring method provided by an embodiment of the present disclosure.
FIG. 4 is schematic diagram 3 of signaling interaction of a control signaling monitoring method provided by an embodiment of the present disclosure.
FIG. 5 is schematic structural diagram 1 of a control signaling monitoring apparatus provided by an embodiment of the present disclosure.
FIG. 6 is s schematic structural diagram 2 of a control signaling monitoring apparatus provided by an embodiment of the present disclosure.
FIG. 7 is a schematic structural diagram of a user equipment provided by an embodiment of the present disclosure.
FIG. 8 is a schematic structural diagram of a network device provided by an embodiment of the present disclosure.

### DESCRIPTION OF EMBODIMENTS

The term "and/or" in the present disclosure describes the association relationship between associated objects, indicating that there can be three relationships. For example, "A and/or B" may indicate these three situations: A exists alone, A and B exist simultaneously, and B exists alone. The character "/" generally indicates that the associated objects before and after the character are in an "or" relationship.

In embodiments of the present disclosure, the term "multiple" refers to two or more than two, and other quantifiers are similar to it.

The technical solutions provided by the embodiments of the present disclosure can be applied to a variety of systems, especially a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These various systems each include a terminal and a network device. The systems also include a core network part, e.g., an evolved packet system (Evolved Packet System, EPS), a 5G system (5GS), etc.

The user equipment involved in the embodiments of the present disclosure may refer to a device that provides voice and/or data connectivity to a user, a handheld device with a wireless connection function, or other processing devices connected to a wireless modem, etc. In different systems, the name of a user equipment may also be different. For example, in a 5G system, a user equipment may be called a terminal device. A wireless terminal device can communicate with one or more core networks (Core Networks, CNs) via a radio access network (Radio Access Network, RAN). A wireless terminal device can be a mobile terminal device, such as a mobile phone (also known as a "cellular" phone) and a computer with a mobile terminal device, which may be, for example, a portable, pocket-sized, handheld, computer-built-in or vehicle-mounted mobile apparatus, which exchanges language and/or data with the wireless access network. For example, the wireless terminal device may be devices such as a personal communication service (Personal Communication Service, PCS) phone, a cordless phone, a session initiated protocol (Session Initiated Protocol, SIP) phone, a wireless local loop (Wireless Local loop, WLL) station, a personal digital assistant (Personal Digital Assistant, PDA), etc. The wireless terminal device may also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiment of the present disclosure.

The network device involved in the embodiments of the present disclosure may be a base station, and the base station may include multiple cells that provide services for terminals. According to different specific application scenarios, a base station may also be called an access point, or a device in an access network that communicates with a wireless terminal device through one or more sectors over an air interface, or other names. The network device may be used to exchange received air frames with Internet protocol (Internet Protocol, IP) packets and act as a router between a wireless terminal device and the rest of the access network, where the rest of the access network may include an Internet protocol (Internet Protocol, IP) communication network. The network device may also coordinate attribute management of the air interface. For example, the network device involved in the embodiments of the present disclosure may be a network device (Base Transceiver Station, BTS) in a global system for mobile communications (Global System for Mobile communications, GSM) or code division multiple access (Code Division Multiple Access, CDMA), or may be a network device (NodeB) in wide-band code division multiple access (Wide-Band Code Division Multiple Access, WCDMA), or may be an evolutional network device (evolutional Node B, eNB or e-NodeB) in a long term evolution (long term evolution, LTE) system, a 5G base station (gNB) in a 5G network architecture (next generation system), or may be a home evolved base station (Home evolved Node B, HeNB), a relay node (relay mode), a home base station (femto), a pico base station (pico), etc., which is not limited in the embodiments of the present disclosure. In some network structures, a network device may include a node of a centralized unit (centralized unit, CU) and a node of a distributed unit (distributed unit, DU), and the centralized unit and the distributed unit may also be separated geographically.

One or more antennas can be used between a network device and a user equipment respectively for a multi input multi output (Multi Input Multi Output, MIMO) transmission. The MIMO transmission may be a single user MIMO (Single User MIMO, SU-MIMO) or a multiple user MIMO (Multiple User MIMO, MU-MIMO). According to the shape and number of a combination of root antennas, the MIMO transmission may be a 2D-MIMO, a 3D-MIMO, an FD-MIMO or a massive-MIMO, and may also be a diversity transmission, a precoding transmission or a beamforming transmission, etc.

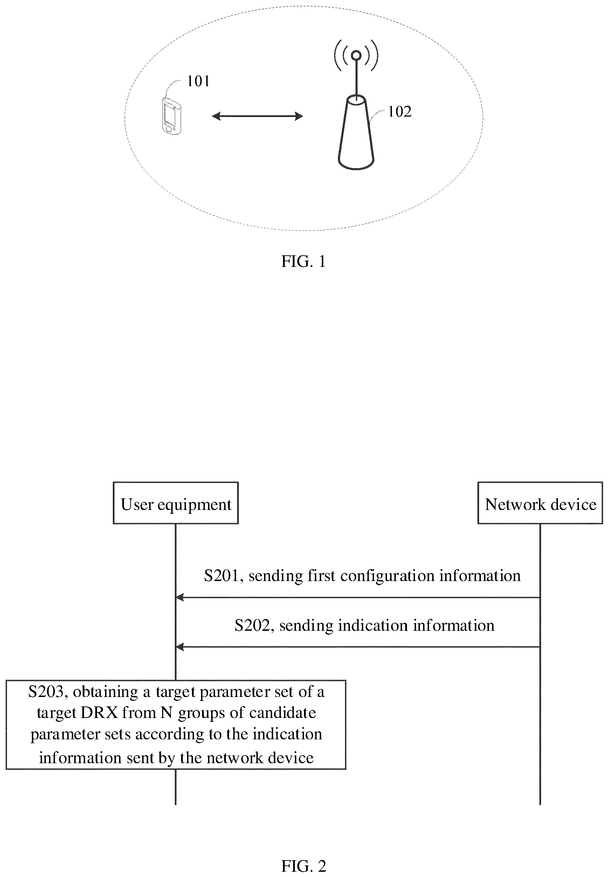

FIG. 1 is a schematic diagram of an application scenario provided by an embodiment of the present disclosure. As shown in FIG. 1, this embodiment provides a communication system, which includes a user equipment 101 and a network device 102.

The network device 102 in this embodiment is illustrated by taking a base station as an example, but it is not limited thereto.

The above scenario may also include other devices, such as a wireless relay device and a wireless backhaul device, etc., which are not shown in FIG. 1.

In a practical application, in order to improve timeliness and energy saving of a data transmission process, a discontinuous reception (Discontinuous Reception, DRX) mechanism is introduced in a long term evolution (Long Term Evolution, LTE) system, that is, during a DRX cycle, the user equipment 101 only monitors a PDCCH signaling within an activation period (On duration), and the user equipment 101 does not receive other PDCCH signaling except a scheduling broadcast signaling within a non-activation period (DRX off) to reduce power consumption.

The activation period is a time period in which at least one of the following timers has not expired: a DRX activation period timer (drx-onDurationTimer), a non-activation timer (drx-InactivityTimer), a downlink retransmission timer (drx-RetransmissionTimerDL), an uplink retransmission timer (drx-RetransmissionTimerUL), a random access contention resolution timer (ra-ContentionResolutionTimer) and a message B response window (msgB-ResponseWindow), etc.

During the above-mentioned data transmission process, after being generated, each frame of a service data packet will go through encoding, network routing and other links before reaching the side of the network device 102. During this process, due to a data packet size, network congestion and other circumstances, different degrees of delay jitter (jitter) will be generated when the service data packet arrives at the network device 102, and the delay jitter has a certain degree of randomness, causing the data packet transmission to be unaligned with the activation period of DRX, thereby causing data packet transmission delay.

In view of this, the embodiments of the present disclosure provide a control signaling monitoring method, an apparatus, a device and a storage medium, which realizes adjustment of the DRX activation period in response to a dynamic change in data packet arrival by indicating a target parameter set of the DRX cycle, increasing the alignment probability of the data packet and the DRX activation period, thereby reducing waiting delay of the data packet transmission.

It should be noted that the methods and the apparatuses provided in embodiments of the present disclosure are based on the same concept of the application. Since the methods and the apparatuses solve problems in similar principles, the implementation of the apparatuses and that of the method can be referred to for each other, and repeated details will not be repeated.

The technical solutions in embodiments of the present disclosure will be clearly and completely described below with reference to the accompanying drawings in embodiments of the present disclosure. Obviously, the described embodiments are only some of embodiments of the present disclosure, not all of them. Based on the embodiments in the present disclosure, all other embodiments obtained by those of ordinary skills in the art without paying creative efforts shall fall within the scope of protection of the present disclosure.

FIG. 2 is schematic diagram 1 of signaling interaction of a control signaling monitoring method provided by an embodiment of the present disclosure. As shown in FIG. 2, the control signaling monitoring method may include the following steps.

S201, a network device sends first configuration information to a user equipment.

The first configuration information is used to determine N groups of candidate parameter sets, where N is an integer greater than or equal to 1.

In a practical application, different candidate parameter sets are used to determine different monitoring times of a control signaling of a DRX cycle. The embodiment of the present disclosure does not limit the type of the candidate parameter set. For example, the candidate parameter set may be a combination of one or more of the following parameters: a DRX cycle time offset value (offset), an activation period timer (on-duration timer), a non-activation timer (drx-Inactivity Timer), a downlink retransmission timer (drx-RetransmissionTimerDL), an uplink retransmission timer (drx-RetransmissionTimerUL), a random access contention resolution timer (ra-ContentionResolutionTimer), a message B response window (msgB-ResponseWindow), etc.

For the convenience of explanation, the candidate parameter set in subsequent embodiments is shown by taking the offset value as an example, but this is not limited in practical applications. Related methods of other types of the candidate parameter sets in the present disclosure are similar thereto, and will not be described in detail in the following.

In some embodiments, the candidate parameter set takes the offset parameter as an example, and the first configuration information includes at least one of the following.
(1) The first configuration information is: an offset parameter candidate set {offset 1, offset 2, ..., offset N}, where the offset parameter candidate set is a set formed by any N values within an available DRX cycle, and the corresponding offset value can be configured randomly.
(2) The first configuration information is: an offset parameter candidate set {offset 1, offset 2, ..., offset N}, where a DRX cycle is divided into N segments evenly, time of each segment corresponds to one offset value, and the length of an activation period timer of each segment is the same.

On one hand, N may be a ratio of the length of the DRX cycle and the time length of the timer (on-duration), or a quantity of subframes in each group of picture (Group Of Picture, GOP).

On the other hand, N may also be a quantity of DRX cycle groups used to adapt to a service refreshing rate. For example, 60FPS needs to correspond to one DRX cycle (with a cycle of 50ms) being divided into 3 segments, then N=3.

(3) The first configuration information is: an offset parameter candidate set {offset 1, offset 2, ..., offset N} and a corresponding DRX activation timer (on-duration timer) candidate subset {on-duration 1, on-duration 2, ..., on-duration N}.

Exemplarily, the Nth group of candidate parameter sets is {offset N, on-duration N}.

(4) The first configuration information is: an offset parameter candidate set {offset 1, offset 2, ..., offset N}, where offset 1 is an explicitly-configured value, and offset 2, ..., offset N are calculated based on offset 1. As for a calculation method, there is no specific limitation in the embodiment of the present disclosure. For example, offset 2, ..., offset N can be calculated based on offset 1 and a preset time interval.

Exemplarily, offset 2=offset 1+delta offset 1, offset 3=offset 2+delta offset 2, ... Here, delta offset 1 is a preset time interval between offset 1 and offset 2, and delta offset 2 is a preset time interval between offset 2 and offset 3. Delta offset 1 and delta offset 2 may be the same or different, and is not limited here.

(5) The first configuration information is: an offset parameter candidate set {offset 1, offset 2, ..., offset N}, where the candidate offset value is associated with other parameters.

Exemplarily, the value of the offset parameter is associated with an integer of a radio frame, that is, for different radio frame numbers, values of their offsets may be the same or different.

It should be noted that the above methods for determining the first configuration information are exemplary. Obviously, those skilled in the art can make various changes and modifications to the present disclosure without departing from the spirit and scope of the present disclosure. In this way, if these changes and modifications of the present disclosure fall within the scope of the claims of the present disclosure and their equivalent technologies, the present disclosure is also intended to include these changes and modifications.

Correspondingly, the user equipment receives the first configuration information and determines N groups of candidate parameter sets according to the first configuration information.

It should be understood that the embodiment of the present disclosure does not specifically limit the method for the network device to send the first configuration information to the user equipment. For example, in a possible implementation, the network device may send the first configuration information to the user equipment through one or more combinations of a higher layer signaling, a MAC CE signaling or a physical layer protocol specification.

In another possible implementation, the network device may also send a relevant parameter of N groups of candidate parameter sets to the user equipment, to cause the user equipment to calculate and obtain the N groups of candidate parameter sets according to the relevant parameter.

S202, the network device sends indication information to the user equipment.

S203, the user equipment obtains a target parameter set of a target DRX from the N groups of candidate parameter sets according to the indication information sent by the network device.

The indication information is used to indicate to the user equipment to determine the target parameter set from the N groups of candidate parameter sets, and the target parameter set is used to determine a control signaling monitoring time.

In a practical application, the user equipment performs discontinuous monitoring of a PDCCH according to a Rel-16 DRX mechanism. After the user equipment obtains the target parameter set, the PDCCH monitoring is performed within the activation period corresponding to one or more different offset positions within the target DRX cycle. Since different target parameter sets correspond to different control signaling monitoring times, through this solution, the control signaling monitoring time can be dynamically determined, thereby the alignment probability of the data packet transmission process and the monitoring time is increased, and the data packet transmission delay is reduced.

It should be understood that specific solutions for the user equipment to determine the target parameter set and solutions for monitoring the control signaling according to the target parameter will be shown in subsequent embodiments.

In the embodiment of the present disclosure, the user equipment receives the first configuration information sent by the network device, where the first configuration information is used to determine N groups of candidate parameter sets, and obtains the target parameter set of the target DRX from the N groups of candidate parameter sets according to the indication information sent by the network device, where the target parameter set is used to determine the control signaling monitoring time. In this solution, the control signaling monitoring time can be dynamically determined according to the target parameter set of the DRX, thereby the alignment probability of the data packet transmission process and the monitoring time is increased, and the data packet transmission delay is reduced.

In some embodiments, the network device may send the indication information to the user equipment through an explicit indication or an implicit indication. The so-called explicit indication means that the target parameter set is clearly indicated in the indication information; the so-called implicit indication means that the target parameter set is not clearly indicated in the indication information, and it is necessary for the user equipment to perform a corresponding calculation according to the indication information to obtain the target parameter set.

In a practical application, the explicit indication can be implemented by way of sending a target indication signaling to the user equipment, and the implicit indication can be implemented by way of sending second configuration information to the user equipment. The control signaling monitoring methods corresponding to the above two indication manners are explained in detail below with reference to specific embodiments.

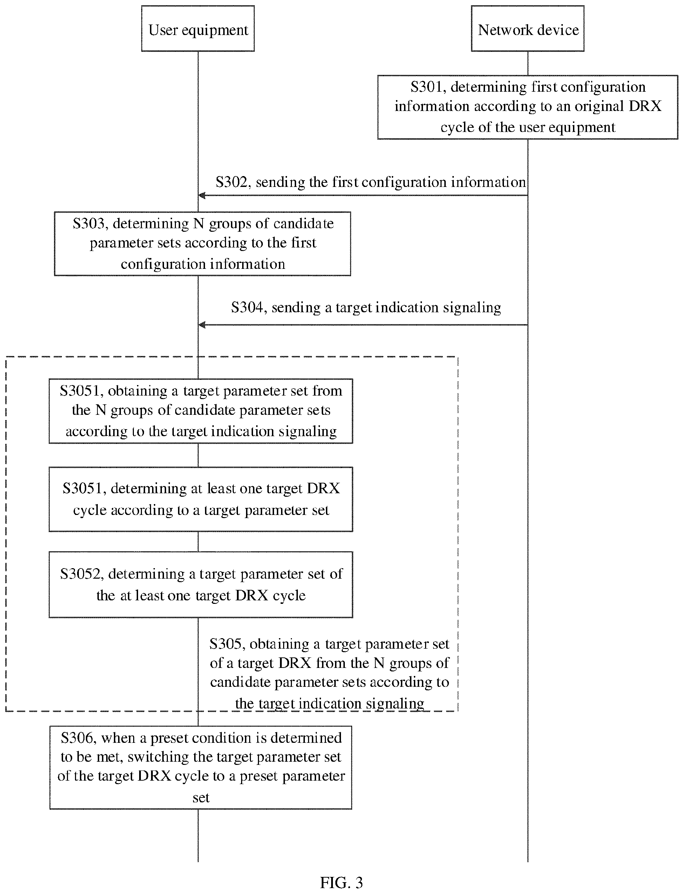

FIG. 3 is schematic diagram 2 of signaling interaction of a control signaling monitoring method provided by an embodiment of the present disclosure. As shown in FIG. 3, the control signaling monitoring method in this embodiment includes the following steps.

S301, a network device determines first configuration information according to an original DRX cycle of a user equipment.

The first configuration information includes: N groups of candidate parameter sets or a related parameter of N groups of candidate parameter sets, and the related parameter is used to determine the N groups of candidate parameter sets.

S302, the network device sends the first configuration information to the user equipment.

S303, the user equipment determines the N groups of candidate parameter sets according to the first configuration information.

It should be noted that the steps S301-S303 are similar to the solution in the embodiment shown in FIG. 2. For details, reference may be made to the above embodiment, and details will not be described here again.

S304, the network device sends a target indication signaling to the user equipment.

S305, the user equipment obtains a target parameter set of a target DRX from the N groups of candidate parameter sets according to the target indication signaling sent by the network device.

The target indication signaling is at least one of a DCI signaling, a MAC CE signaling or a higher layer signaling.

The target indication signaling carries at least one of target parameter set indication information, switching indication information or target parameter set index indication information.

The target parameter set indication information is used to indicate the target parameter set. The switching indication information is used to indicate to the user equipment to perform parameter set switching. The target parameter index indication information is used to indicate to the user equipment to determine the target parameter set from the N groups of candidate parameter sets according to the indication information.

Exemplarily, the network device sending the target indication signaling to the user equipment includes the following several implementations.
(1) Adding an information field of 1~M bits in the DCI signaling, the MAC CE signaling or the higher layer signaling, where indication information carried in the information field is used to indicate to the user equipment to determine one or more target parameter sets of a target DRX cycle from the N groups of candidate parameter sets.

The DCI signaling here may be a scheduling DCI signaling or a non-scheduling DCI signaling. The embodiment of the present disclosure does not limit the format of the DCI signaling.

Exemplarily, the format of the scheduling DCI signaling is, for example, 0_0/1_0/0_1/1_1/0_2/1_2; the format of the non-scheduling DCI signaling is, for example, 0_1/1_1, etc. In other embodiments, it may also be other DCI formats for group notification, for example: 2_0, 2_6, etc., which will not be listed here.

In a first possible implementation, a 1-bit information field can be used to indicate the target parameter set of the target DRX cycle, or a 1-bit information field can be used to indicate an index (index) of the target parameter set in the N groups of parameter candidate sets, where the index is used for the user equipment to obtain the target parameter set from the N groups of parameter candidate sets.

Correspondingly, when the 1-bit information field indicates the target parameter set, the user equipment directly obtains the target parameter set after receiving the target indication signaling; or, when the 1-bit information field indicates the index in the N groups of parameter candidate sets, the user equipment obtains the target parameter set from the N groups of parameter candidate sets according to the index.

In a second possible implementation, a 1-bit information field can be used to indicate a first target parameter set of the target DRX cycle and a preset time interval, e.g., offset 1 and delta_offset; or, a 1-bit information field can be used to indicate an index (index 1) of a first target parameter set in the N groups of parameter candidate sets and a preset time interval, where index 1 is used for the user equipment to obtain the first target parameter set from the N groups of parameter candidate sets.

Correspondingly, when the target indication signaling received by the user equipment is the first target parameter set and the preset time interval, other target parameter sets are obtained according to the first target parameter set and the preset time interval; or, when the target indication signaling received by the user equipment is index 1 and the preset time interval, the first target parameter set is determined according to index 1, and then other target parameter sets are obtained according to the first target parameter set and the preset time interval.

In a third possible implementation, a t-bit information field can be used to indicate t target parameter sets of the target DRX cycle, where t is an integer greater than 1, and each 1-bit information field is used to indicate a different target parameter set.

Each 1-bit information field may be used to indicate at least one of the following information: a target parameter set, an index corresponding to a target parameter set, or a bit mapping of a target parameter set in N groups of candidate parameter sets.

Exemplarily, taking each 1-bit information field being used to indicate the bit mapping of the target parameter set in the N groups of candidate parameter sets as an example, when the value of the 1-bit information field is "1", it is indicated that this target parameter set is applied; when the value of the 1-bit information field is "0", it is indicated that this target parameter set is not applied.

(2) Redefining an existing information field, e.g., a secondary cell (SCell) dormancy indication field, etc.

Specifically, the DCI format carrying scheduling information is, for example, 0_0/1_0/0_1/1_1/0_2/1_2, etc. A specific meaning of the SCell dormancy indication field in the DCI format is determined by a value of a carrier indication information field (CIF), that is, when CIF=0 or the CIF has zero bit, the SCell dormancy indication information field is used to indicate a dormancy/adaptive behavior of a SCell (group); when the CIF is not zero, 1-t of the SCell dormancy indication information field can be reused to indicate the target parameter set.

Exemplarily, when the DCI format carrying scheduling information is 0_1/1_1, an existing information field is redefined in a downlink control signaling. The information field is used to indicate the target parameter set, where the information field includes at least one or more of the following types: a modulation and coding scheme information field (modulation and coding scheme), a new data indicator field (new data indicator), a redundancy version information field (redundancy version), a hybrid automatic repeat request (Hybrid Automatic Repeat reQuest, HARQ) process number field (HARQ process number), an antenna port(s) field (antenna port(s)), a demodulation reference signal (Demodulation Reference Signal, DMRS) sequence initialization field (DMRS sequence initialization), etc.

In a practical application, 1~N bits in the information field can be used to indicate the target parameter set.

Specifically, when it is determined that the following multiple conditions are met at the same time, any 1~N bits in the information field listed above can be used to indicate the target parameter set individually, or the information bits in the information field listed above can be used to indicate a joint indication of the target parameter set and the secondary cell dormancy indication:
a short HARQ-ACK request field is default or has a "0" value;
a carrier indication field is default or has a value of "0";
a resource allocation indication field has a value of all "0" or all "1".

It should be understood that the target parameter set in the embodiments of the present disclosure may be one or more combinations of parameters such as an offset, an on-duration timer, a drx-Inactivity Timer, a drx-RetransmissionTimerDL, a drx-RetransmissionTimerUL, a ra-ContentionResolutionTimer, a msgB-ResponseWindow, etc., and various types of target parameter sets all can be indicated by the above-mentioned multiple implementation methods. As for specific applications of each type of target parameter sets, the embodiments of the present disclosure will not list them one by one.

S3051, the user equipment determines at least one target DRX cycle according to a target parameter set.

A quantity of target DRX cycles may be specifically configured through a higher layer signaling, or may be a fixed value, that is, an indicated value is kept using until new indication information is received.

S3052, the user equipment determines a target parameter set of the at least one target DRX cycle.

In a practical application, the user equipment performs discontinuous monitoring of a PDCCH according to a Rel-16 DRX mechanism. After the user receives the target indication signaling, according to the target indication signaling, the PDCCH monitoring is performed within the activation period corresponding to one or more different offset positions within the target DRX cycle.

A specific monitoring behavior of the user equipment includes a combination of one or more of the following.
(1) When the target indication signaling carries one target parameter set, the target indication signaling can be used to indicate multiple offset positions of the target DRX cycle.

Taking the target parameter set including at least a DRX cycle time offset value as an example, in a first possible implementation, for DCI format 2_6 carrying the target parameter set, because a monitoring position of DCI format 2_6 is within a PS-offset time interval before the DRX activation period, the offset value indicated by the target parameter set can take effect in one or more DRX cycles next to the DRX cycle associated with DCI format 2_6, that is, the user equipment starts a DRX activation period timer at the indicated offset value in the one or more DRX cycles next to the DRX cycle associated with DCI format 2_6.

In a second possible implementation manner, for scheduling DCI carrying the target parameter set, on one hand, the offset value indicated by the target parameter set can take effect in the next one or more DRX cycles. That is, the user equipment starts a DRX activation period timer at the indicated offset value in the next one or more DRX cycles.

On the other hand, it may also take effect in one or more DRX cycles after receiving a HARQ-ACK feedback for the scheduling DCI. That is, the user equipment or the network device successfully receives the scheduling DCI and feeds back the HARQ-ACK, then a DRX activation period timer is started at the indicated offset value in the next one or more DRX cycles after the HARQ-ACK.

In a third possible implementation, for non-scheduling DCI carrying the target parameter set, the offset value indicated by the target parameter set can take effect in the next one or more DRX cycles, that is, a terminal starts a DRX activation period timer at the indicated offset value in the next one or more DRX cycles.

(2) When the target indication signaling carries multiple target parameter sets, the target indication signaling can be used to indicate multiple offset positions of the target DRX cycle. In other words, there are multiple activation periods within one DRX cycle.

Taking the target parameter set including multiple offset values as an example, in a first possible implementation, for DCI format 2_6 carrying indication information, because a monitoring position of DCI format 2_6 is within a PS-offset time interval before the DRX activation period, the multiple offset values indicated by the indication information can take effect in one or more DRX cycles next to the DRX cycle associated with DCI format 2_6, that is, the user equipment starts corresponding DRX activation period timers at the multiple offset values in the one or more DRX cycles next to the DRX cycle associated with DCI format 2_6.

The DRX activation period timers corresponding to different offset values may be the same or different.

In a second possible implementation, for scheduling DCI carrying the target indication signaling, on one hand, the offset values indicated by the target indication signaling can take effect in the next one or more DRX cycles, that is, a terminal starts corresponding DRX activation period timers at the multiple offset values in the next one or more DRX cycles.

On the other hand, it can take effect in one or more DRX cycles after receiving a HARQ-ACK feedback for the scheduling DCI. That is, the user equipment or the network device successfully receives the scheduling DCI and feeds back the HARQ-ACK, then corresponding DRX activation period timers are started at the multiple offset values in the next one or more DRX cycles after the HARQ-ACK.

In a third possible implementation, for non-scheduling DCI carrying the target indication signaling, the offset values indicated by the target indication signaling can take effect in the next one or more DRX cycles, that is, a terminal starts corresponding DRX activation period timers at the multiple offset values in the next one or more DRX cycles.

When the user equipment detects a data packet during a certain DRX activation period within the DRX cycle, within this DRX cycle, corresponding DRX activation period timers can be started at other configured offsets, or DRX activation period timers corresponding to part of other configured offsets can be started at the other configured offsets, or corresponding DRX activation period timers can also be not started at other configured offsets.

S306, when the user equipment determines that a preset condition is met, the user equipment switches the target parameter set of the target DRX cycle to a preset parameter set.

Under a normal circumstance, the user equipment uses the Rel-16 DRX mechanism as a basic function. When the user equipment receives the first configuration information and is configured with N groups of candidate parameter sets, a feature function can be started, that is, when the network device configures the user equipment with the N groups of candidate parameter sets, the user equipment can switch between the feature function and the basic function according to the indication information.

Exemplarily, an originally configured parameter set of the Rel-16 DRX mechanism is a default configuration, e.g., an offset value and its related parameter, etc. The N groups of candidate parameter sets and the related parameter in the first configuration information are optional configurations. When the user equipment receives the indication information, discontinuous PDCCH monitoring can be performed according to the target parameter set in the indication information.

Further, when the preset condition is met, the user equipment switches the target parameter set of the target DRX cycle to the preset parameter set, that is, the user equipment performs discontinuous PDCCH monitoring according to the preset parameter set.

The preset parameter set may be a parameter set corresponding to the default configuration of the DRX mechanism, or may be a parameter set reconfigured according to requirements, e.g., a certain DRX parameter set may be specified as a preset parameter set through a higher layer signaling.

Specifically, the user equipment determines that the preset condition is met when at least one of the following situations is met:
when sending service data, a beam failure recovery, a radio link failure, user equipment out-of-sync or the like occurs;
preference information is reported to the network device, where the preference information is used to indicate to update the target parameter set to the preset parameter set;
the target indication signaling fails to be received, where the target indication signaling failing to be received includes a multiple retransmission failure, or inconsistent reception between the user equipment and the network device, etc.;
a target service data transmission is completed, where target service data includes one or more of the following: the scheduling DCI indicating a preset information content, the target indication signaling carrying empty or preset target parameter set information, or a preset switching instruction;
a rollback timer expires, where the rollback timer is used to indicate to update the target parameter set to the preset parameter set;
the user equipment receives a RRC reconfiguration message sent by the network device, where the RRC reconfiguration message is used to modify the target parameter set of the target DRX cycle.

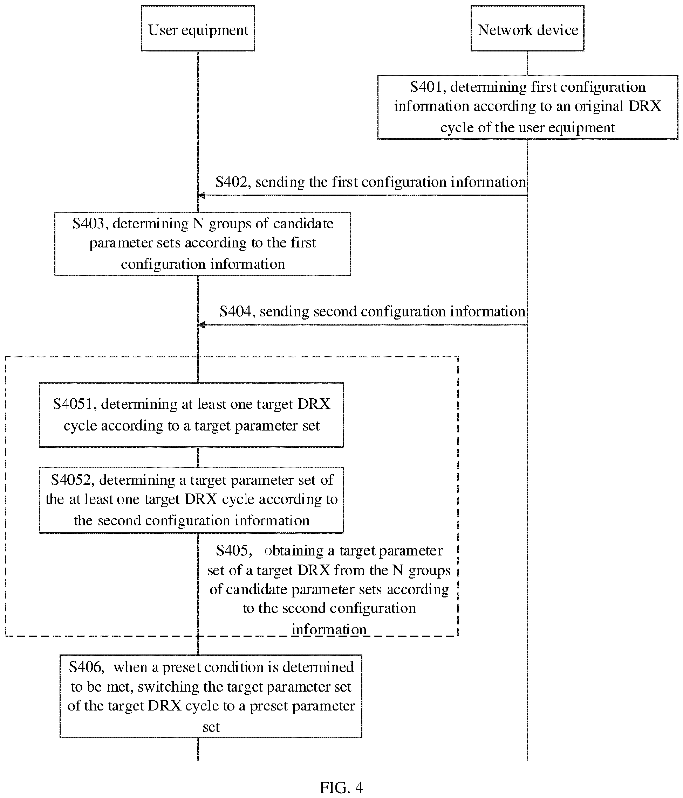

FIG. 4 is schematic diagram 3 of signaling interaction of a control signaling monitoring method provided by an embodiment of the present disclosure. As shown in FIG. 4, the control signaling monitoring method in this embodiment includes the following steps.

S401, a network device determines first configuration information according to an original DRX cycle of a user equipment.

S402, the network device sends the first configuration information to the user equipment.

S403, the user equipment determines N groups of candidate parameter sets according to the first configuration information.

It should be noted that the steps S401-S403 are similar to the solution in the embodiment shown in FIG. 2. For details, reference may be made to the above embodiment, and details will not be described here again.

S404, the network device sends second configuration information to the user equipment.

S405, the user equipment obtains a target parameter set of a target DRX from N groups of candidate parameter sets according to the second configuration information sent by the network device.

In a practical application, when receiving the second configuration information, the user equipment determines whether the second configuration information is currently satisfied, and if so, obtains the target parameter set of the target DRX from the N groups of candidate parameter sets.

Next, a method for determining the target parameter set of the target DRX cycle will be described in detail in conjunction with steps 54051~54053.

S4051, the user equipment determines at least one target DRX cycle according to a target parameter set.

A quantity of target DRX cycles may be specifically configured through a higher layer signaling, or may be a fixed value, that is, an indicated value is kept using until new indication information is received.

S4052, the user equipment determines a target parameter set of the at least one target DRX cycle.

In a practical application, the user equipment performs discontinuous monitoring of a PDCCH according to a Rel-16 DRX mechanism. After the user receives the second configuration information, according to the second configuration information, the PDCCH monitoring is performed within the activation period corresponding to one or more different offset positions within the target DRX cycle.

The second configuration information includes a target time interval and/or a service-specific threshold value.

In some embodiments, the service-specific threshold value includes at least one of the following: a threshold value for a quantity of received service data packets or a threshold value corresponding to a time interval between received service data packets.

In a possible implementation, when the second configuration information includes the service-specific threshold value, the target parameter set may be determined in at least one of the following ways.
(1) The threshold value for the quantity of received service data packets: the network device counts a proportion of data packets arriving in DRX-on duration. If the proportion is greater than a data packet threshold value, a first target parameter set is used; accordingly, if the proportion is less than or equal to the data packet threshold value, a second target parameter set is used.
   In some optional implementations, multiple data packet threshold values can also be set. Different data packet threshold values correspond to different target parameter sets. For example, data packet threshold value 1 corresponds to the first target parameter set, and data packet threshold value 2 corresponds to the second target parameter set. Then when the proportion of the data packets arriving in DRX-on duration meets data packet threshold value 1, the first target parameter set is used; when the proportion of the data packets arriving in DRX-on duration meets data packet threshold value 2, the second target parameter set is used.
(2) The threshold value corresponding to the time interval between received service data packets: the network device counts the time interval between multiple data packets arriving in DRX-on duration. If the time interval is less than a time interval threshold value, the first target parameter set is used; accordingly, if the time interval is greater than or equal to the time interval threshold value, the second target parameter set is used.

In some optional implementations, multiple time interval threshold values can also be set. Different time interval threshold values correspond to different target parameter sets. For example, time interval threshold value 1 corresponds to the first target parameter set, and time interval threshold value 2 corresponds to the second target parameter set. Then when the interval time between the data packets meets time interval threshold value 1, the first target parameter set is used; when the interval time between the data packets meets time interval threshold value 2, the second target parameter set is used.

In a possible implementation, the target time interval includes at least one of the following: a timer configured by a higher layer signaling, a time interval associated with a service refreshing rate, or a time interval associated with a radio frame.

When the second configuration information includes the target time interval, during determining the target parameter set, the user equipment is specifically configured to:
determine a target parameter set from N groups of candidate parameter sets once every target time interval T. A corresponding target parameter set can be selected from the N groups of candidate parameter sets according to a preset rule. The embodiments of the present disclosure do not specifically limit the specific content of the preset rule.

Exemplarily, switching can be performed in an order of a set {offset_l, offset_2, ..., offset_N} of N groups of candidate parameters; or, switching can also be performed according to the target parameter set configured by a higher layer signaling; or, switching can also be performed through a candidate offset value indicated by a MAC CE.

In some optional implementation examples, the second configuration information may also include: a service data packet feature parameter. For example, the first target parameter set is used for an I frame data packet type; the second target parameter set is used for a P frame data packet type.

In other embodiments, the second configuration information may also include: a service data packet type parameter. For example, different data packet types correspond to different target parameter sets.

S406, when the user equipment determines that a preset condition is met, the user equipment switches the target parameter set of the target DRX cycle to a preset parameter set.

The preset condition is determined to be met when at least one of the following situations is met:
when sending service data, a beam failure recovery, a radio link failure, user equipment out-of-sync or the like occurs;
preference information is reported to the network device, where the preference information is used to indicate to update the target parameter set to the preset parameter set;
the target indication signaling fails to be received, where the target indication signaling failing to be received includes a multiple retransmission failure, inconsistent reception between the user equipment and the network device, etc.;
a target service data transmission is completed, where target service data includes one or more of the following: scheduling DCI indicating a preset information content, the target indication signaling carrying empty or preset target parameter set information, or a preset switching instruction;
a rollback timer expires, where the rollback timer is used to indicate to update the target parameter set to the preset parameter set;
the user equipment receives a RRC reconfiguration message sent by the network device, where the RRC reconfiguration message is used to modify the target parameter set of the target DRX cycle.

It should be noted that step S406 is similar to step S306 in the embodiment shown in FIG. 3. For a specific content, reference may be made to the above embodiment, and details will not be described here again.

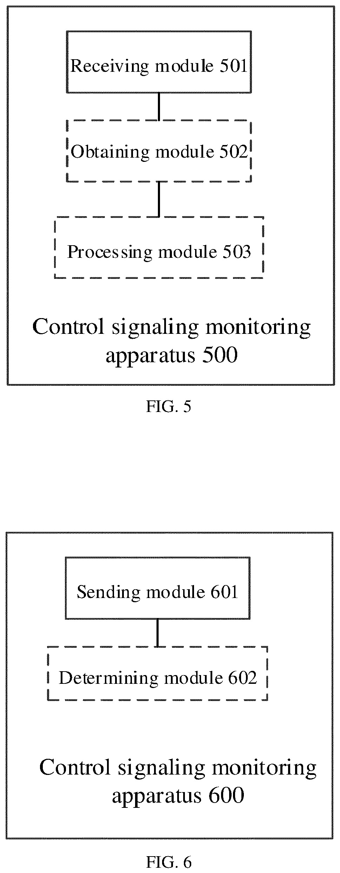

On the user equipment side, an embodiment of the present disclosure provides a control signaling monitoring apparatus, which is applied to a user equipment. FIG. 5 is schematic structural diagram 1 of a control signaling monitoring apparatus provided by an embodiment of the present disclosure. As shown in FIG. 5, the control signaling monitoring apparatus 500 includes: a receiving module 501 and an obtaining module 502.

The receiving module 501 is configured to receive first configuration information sent by a network device, and the first configuration information is used to determine N groups of candidate parameter sets, where N is an integer greater than or equal to 1;

The obtaining module 502 is configured to obtain a target parameter set of a target DRX from the N groups of candidate parameter sets according to indication information sent by the network device, where the target parameter set is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, the obtaining module 502 is specifically configured to: determine at least one target DRX cycle according to a target parameter set; determine a target parameter set of the at least one target DRX cycle.

In some optional implementations, the target parameter set includes M target parameters, and the M target parameters at least include a DRX cycle time offset value.

In some optional implementations, the first configuration information includes: N groups of candidate parameter sets or a related parameter of N groups of candidate parameter sets, where the related parameter is used to determine the N groups of candidate parameter sets.

In some optional implementations, the control signaling monitoring apparatus 500 further includes: a processing module 503, configured to switch the target parameter set of the target DRX cycle to a preset parameter set when a preset condition is determined to be met.

In some optional implementations, the preset condition is determined to be met when at least one of the following situations is met:
one or more situations of a beam failure recovery, a radio link failure or user equipment out-of-sync occur when sending service data;
preference information is reported to the network device, and the preference information is used to indicate to update the target parameter set to the preset parameter set;
the target indication signaling fails to be received;
a target service data transmission is completed;
a rollback timer expires, and the rollback timer is used to indicate to update the target parameter set to the preset parameter set;
the user equipment receives a RRC reconfiguration message sent by the network device, and the RRC reconfiguration message is used to modify the target parameter set of the target DRX cycle.

It should be noted here that the above-mentioned control signaling monitoring apparatus provided by the present disclosure can correspondingly implement all the method steps implemented by the user equipment in the above-mentioned method embodiments, and can achieve the same technical effects. The parts and beneficial effects of this embodiment that are same as the method embodiments will not be specifically elaborated here.

On the network device side, an embodiment of the present disclosure provides a control signaling monitoring apparatus, which is applied to a network device. FIG. 6 is schematic structural diagram 2 of a control signaling monitoring apparatus provided by an embodiment of the present disclosure. As shown in FIG. 6, the control signaling monitoring apparatus 600 includes: a sending module 601.

The sending module 601 is configured to: send first configuration information to the user equipment, where the first configuration information is used to determine N groups of candidate parameter sets, where N is an integer greater than or equal to 1; send indication information to the user equipment, where the indication information is used to indicate to obtain a target parameter set of a target DRX from the N groups of candidate parameter sets, and the target parameter is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, the control signaling monitoring apparatus 600 further includes: a determining module 602, configured to determine the first configuration information according to an original DRX cycle of the user equipment, where the first configuration information includes: N groups of candidate parameter sets or a related parameter of N groups of candidate parameter sets, and the related parameter is used to determine the N groups of candidate parameter sets.

It should be noted here that the above-mentioned network device provided by the present disclosure can implement all the method steps implemented on the network device side in the above-mentioned method embodiments, and can achieve the same technical effects. The parts and beneficial effects of this embodiment that are same as the method embodiments will not be specifically elaborated here.

It should be noted that the division of units in the embodiments of the present disclosure is schematic and is only a logical function division. In an actual implementation, there may be other division manners. In addition, the functional units in various embodiments of the present disclosure may be integrated into one processing unit, or each unit may exist physically alone, or two or more units may be integrated into one unit. The above integrated unit may be implemented in a form of hardware or in a form of a software functional unit.

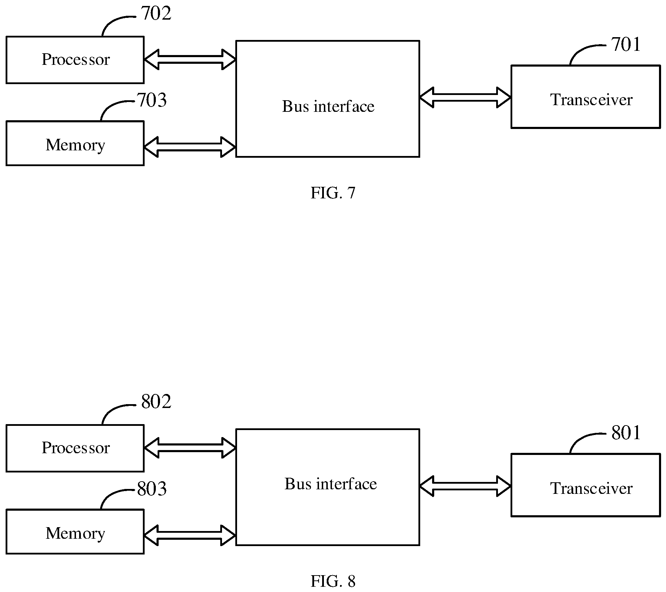

FIG. 7 is a schematic structural diagram of a user equipment provided by an embodiment of the present disclosure. Here the relay terminal is a target relay terminal. As shown in FIG. 7, the target relay terminal includes: a transceiver 701, a processor 702 and a memory 703.

The memory 703 is configured to store a computer program.

The transceiver 701 is configured to send and receive data under control of the processor 702.

In FIG. 7, a bus architecture may include any number of interconnected buses and bridges, and specifically, various circuits of one or more processors represented by the processor 702 and a memory represented by the memory 703 are linked together. The bus architecture can also link together various other circuits such as a peripheral, a voltage regulator and a power management circuit, etc., which are all well known in the art and therefore will not be described further herein. A bus interface provides an interface. The transceiver 701 may be multiple elements, that is, it may include a transmitter and a receiver, providing units for communicating with various other apparatuses over transmission media. These transmission media include transmission media such as a wireless channel, a wired channel, an optical cable, etc. The processor 702 is responsible for managing the bus architecture and general processing, and the memory 703 can store data used by the processor 702 when performing operations.

The processor 702 is responsible for managing the bus architecture and general processing, and the memory 703 can store data used by the processor 702 when performing operations.

In some optional implementations, the processor 702 may be a central processing unit (central processing unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

The processor 702 is configured to execute any terminal access method related to the target relay terminal provided by the embodiments of the present disclosure according to obtained executable instructions by calling the computer program stored in the memory 703. The processor 702 and the memory 703 may also be arranged physically separated.

Specifically, the processor 702 is configured to read the computer program in the memory 703 and perform the following operations:
receiving first configuration information sent by a network device, where the first configuration information is used to determine N groups of candidate parameter sets, where N is an integer greater than or equal to 1;
obtaining a target parameter set of a target DRX from the N groups of candidate parameter sets according to indication information sent by the network device, where the target parameter set is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, the obtaining the target parameter set of the target DRX from the N groups of candidate parameter sets, includes:
determining at least one target DRX cycle according to a target parameter set;
determining a target parameter set of the at least one target DRX cycle.

In some optional implementations, the target parameter set includes M target parameters, and the M target parameters at least include a DRX cycle time offset value.

In some optional implementations, the first configuration information includes: N groups of candidate parameter sets or a related parameter of N groups of candidate parameter sets, and the related parameter is used to determine the N groups of candidate parameter sets.

In some optional implementations, when a preset condition is determined to be met, the target parameter set of the target DRX cycle is switched to a preset parameter set.

In some optional implementations, the preset condition is determined to be met when at least one of the following situations is met:
one or more situations of a beam failure recovery, a radio link failure or user equipment out-of-sync occur when sending service data;
preference information is reported to the network device, and the preference information is used to indicate to update the target parameter set to the preset parameter set;
the target indication signaling fails to be received;
a target service data transmission is completed;
a rollback timer expires, and the rollback timer is used to indicate to update the target parameter set to the preset parameter set;
the user equipment receives a RRC reconfiguration message sent by the network device, and the RRC reconfiguration message is used to modify the target parameter set of the target DRX cycle.

It should be noted here that the above-mentioned user equipment provided by the present disclosure can implement all the method steps implemented by the user equipment in the above-mentioned method embodiments, and can achieve the same technical effects. The parts and beneficial effects of this embodiment that are same as the method embodiments will not be specifically elaborated here.

FIG. 8 is a schematic structural diagram of a network device provided by an embodiment of the present disclosure. As shown in FIG. 9, the network device includes: a transceiver 801, a processor 802 and a memory 803.

The memory 803 is configured to store a computer program.

The transceiver 801 is configured to send and receive data under control of the processor 802.

In FIG. 8, a bus architecture may include any number of interconnected buses and bridges, and specifically, various circuits of one or more processors represented by the processor 802 and a memory represented by the memory 803 are linked together. The bus architecture can also link together various other circuits such as a peripheral, a voltage regulator, and a power management circuit, etc., which are all well known in the art and therefore will not be described further herein. A bus interface provides an interface. The transceiver 801 may be multiple elements, that is, it may include a transmitter and a receiver, providing units for communicating with various other apparatuses over transmission media. These transmission media include transmission media such as a wireless channel, a wired channel, an optical cable, etc. The processor 802 is responsible for managing the bus architecture and general processing, and the memory 803 can store data used by the processor 802 when performing operations.

The processor 802 is responsible for managing the bus architecture and general processing, and the memory 803 can store data used by the processor 802 when performing operations.

In some optional implementations, the processor 802 may be a central processing unit (central processing unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

The processor 802 is configured to execute any terminal access method related to the target relay terminal provided by the embodiments of the present disclosure according to obtained executable instructions by calling the computer program stored in the memory 803. The processor 802 and the memory 803 may also be arranged physically separated.

Specifically, the processor 802 is configured to read the computer program in the memory 803 and perform the following operations:
sending first configuration information to a user equipment, where the first configuration information is used to determine N groups of candidate parameter sets, where N is an integer greater than or equal to 1;
sending indication information to the user equipment, where the indication information is used to indicate to obtain a target parameter set of a target DRX from the N groups of candidate parameter sets, and the target parameter is used to determine a control signaling monitoring time.

In some optional implementations, the indication information includes a target indication signaling and/or second configuration information.

In some optional implementations, the target indication signaling is at least one of a DCI signaling, a MAC CE signaling or a higher layer signaling.

In some optional implementations, the target indication signaling carries at least one of target parameter set indication information, switching indication information or target parameter set index indication information.

In some optional implementations, the second configuration information includes a target time interval and/or a service-specific threshold value.

In some optional implementations, the target time interval includes at least one of the following: a timer configured by a higher layer signaling, a time interval associated with a service refreshing rate, or a time interval associated with a radio frame.

In some optional implementations, the service-specific threshold value includes at least one of the following: a threshold value for a quantity of received service data packets or a threshold value corresponding to a time interval between received service data packets.

In some optional implementations, the processor 802 is further configured to perform the following operations: determining first configuration information according to an original DRX cycle of the user equipment, where the first configuration information includes: N groups of candidate parameter sets or a related parameter of N groups of candidate parameter sets, and the related parameter is used to determine the N groups of candidate parameter sets.

It should be noted here that the above-mentioned network device provided by the present disclosure can implement all the method steps implemented by the network device in the above-mentioned method embodiments, and can achieve the same technical effects. The parts and beneficial effects of this embodiment that are same as the method embodiments will not be specifically elaborated here.

If the above-mentioned integrated unit is implemented in a form of a software functional unit and sold or used as an independent product, it can be stored in a processor-readable storage medium. Based on this understanding, the technical solution of the present disclosure in essence, or the part contributing to the prior art, or all or part of the technical solution can be embodied in the form of a software product, and the computer software product is stored in a storage medium, including several instructions to cause a computer device (which may be a personal computer, a server, or a network device, etc.) or a processor (processor) to execute all or part of the steps of the methods of various embodiments of the present disclosure. The aforementioned storage medium includes various media that can store program code, such as a U disk, a mobile hard disk, a read-only memory (Read-Only Memory, ROM), a random access memory (Random Access Memory, RAM), a magnetic disk or an optical disk, etc.

On the user equipment side, an embodiment of the present disclosure provides a processor-readable storage medium, where the processor-readable storage medium stores a computer program, and the computer program is used to enable a processor to implement all the method steps implemented by the target relay terminal in the above-mentioned method embodiments, and can achieve the same technical effects. The parts and beneficial effects of this embodiment that are same as the method embodiments will not be specifically elaborated here.

On the network device side, an embodiment of the present disclosure provides a processor-readable storage medium, where the processor-readable storage medium stores a computer program, and the computer program is used to enable a processor to implement all the method steps implemented on the network device side in the above-mentioned method embodiments, and can achieve the same technical effects. The parts and beneficial effects of this embodiment that are same as the method embodiments will not be specifically elaborated here.

The processor-readable storage medium may be any available medium that a processor can access or a data storage device, including but not limited to a magnetic storage (such as a floppy disk, a hard disk, a magnetic tape, a magneto-optical disk (MO), etc.), an optical storage (such as a CD, a DVD, a BD, a HVD, etc.), and a semiconductor memory (such as a ROM, an EPROM, an EEPROM, a non-volatile memory (NAND FLASH), a solid state drive (SSD)), etc.

On the user equipment side, an embodiment of the present disclosure provides a computer program product containing instructions, where the computer program is stored in a storage medium, and at least one processor can read the computer program from the storage medium. When at least one processor executes the computer program, all the method steps implemented by the user equipment in the above-mentioned method embodiments can be implemented, and the same technical effects can be achieved. The parts and beneficial effects of this embodiment that are same as the method embodiments will not be specifically elaborated here.

On the network device side, an embodiment of the present disclosure provides a computer program product containing instructions, where the computer program is stored in a storage medium, and at least one processor can read the computer program from the storage medium. When at least one processor executes the computer program, all the method steps implemented by the network device in the above-mentioned method embodiments can be implemented, and the same technical effects can be achieved. The parts and beneficial effects of this embodiment that are same as the method embodiments will not be specifically elaborated here.

An embodiment of the present disclosure also provides a communication system, including a user equipment and a network device. The user equipment can perform all the method steps performed on the user equipment side in the above-mentioned method embodiments, and can achieve the same technical effects. The network device can perform all the method steps performed on the network device side in the above-mentioned method embodiments, and can achieve the same technical effects. The parts and beneficial effects of this embodiment that are same as the method embodiments will not be specifically elaborated here.

Those skilled in the art should understand that the embodiments of the present disclosure may be provided as methods, systems or computer program products. Therefore, the present disclosure may take the form of an entire-hardware embodiment, an entire-software embodiment, or an embodiment that combines software and hardware aspects. Furthermore, the present disclosure may take the form of a computer program product implemented on one or more computer-usable storage media (including but not limited to a magnetic disk storage and an optical storage, etc.) containing computer-usable program code therein.

The present disclosure is described with reference to schematic diagrams of signaling interaction and/or block diagrams of methods, apparatuses and computer program products according to the embodiments of the present disclosure. It should be understood that each process and/or block in the schematic diagram of signaling interaction and/or the block diagram, and a combination of processes and/or blocks in the schematic diagram of signaling interaction and/or the block diagram, can be implemented by computer-executable instructions. These computer-executable instructions may be provided to a processor of a general-purpose computer, a special-purpose computer, an embedded processor or other programmable data processing device to produce a machine such that instructions executed by the processor of a computer or other programmable data processing device produce an apparatus used to implement specified functions in one process or multiple processes in the schematic diagram of signaling interaction and/or in one block or multiple blocks in the block diagram.

These processor-executable instructions may also be stored in a processor-readable memory that guides a computer or other programmable data processing device to operate in a particular manner, such that the instructions stored in the processor-readable memory produce a manufacture product including an instruction apparatus, where the instruction apparatus implements the functions specified in one process or multiple processes in the schematic diagram of signaling interaction and/or in one block or multiple blocks in the block diagram.

These processor-executable instructions may also be loaded onto a computer or other programmable data processing device, causing a series of operational steps to be performed on the computer or other programmable device to produce computer-implemented processing, thereby the instructions executed on the computer or other programmable device provide steps for implementing the functions specified in one process or multiple processes in the schematic diagram of signaling interaction and/or in one block or multiple blocks in the block diagram.

Obviously, those skilled in the art can make various changes and modifications to the present disclosure without departing from the spirit and scope of the disclosure. In this way, if these changes and modifications of the present disclosure fall within the scope of the claims of the present disclosure and their equivalent technologies, the present disclosure is also intended to include these changes and modifications.

## Claims

1. A control signaling monitoring method, wherein the method is applied to a user equipment, and the method comprises:
receiving first configuration information sent by a network device, wherein the first configuration information is used to determine N groups of candidate parameter sets, wherein N is an integer greater than or equal to 1;
obtaining a target parameter set of a target DRX from the N groups of candidate parameter sets according to indication information sent by the network device, wherein the target parameter set is used to determine a control signaling monitoring time.

2. The control signaling monitoring method according to claim 1, wherein the indication information comprises a target indication signaling and/or second configuration information.

3. The control signaling monitoring method according to claim 2, wherein the target indication signaling is at least one of a DCI signaling, a MAC CE signaling or a higher layer signaling.

4. The control signaling monitoring method according to claim 2, wherein the target indication signaling carries at least one of target parameter set indication information, switching indication information or target parameter set index indication information.

5. The control signaling monitoring method according to claim 2, wherein the second configuration information comprises a target time interval and/or a service-specific threshold value.

6. The control signaling monitoring method according to claim 5, wherein the target time interval comprises at least one of the following: a timer configured by a higher layer signaling, a time interval associated with a service refreshing rate, or a time interval associated with a radio frame.

7. The control signaling monitoring method according to claim 5, wherein the service-specific threshold value comprises at least one of the following: a threshold value for a quantity of received service data packets or a threshold value corresponding to a time interval between received service data packets.

8. The control signaling monitoring method according to any one of claims 1-7, wherein the obtaining the target parameter set of the target DRX from the N groups of candidate parameter sets comprises:
determining at least one target DRX cycle according to the target parameter set;
determining a target parameter set of the at least one target DRX cycle.

9. The control signaling monitoring method according to any one of claims 1-7, wherein the target parameter set comprises M target parameters, and the M target parameters at least comprise a DRX cycle time offset value.

10. The control signaling monitoring method according to any one of claims 1-7, wherein the first configuration information comprises: N groups of candidate parameter sets or a related parameter of N groups of candidate parameter sets, and the related parameter is used to determine the N groups of candidate parameter sets.

11. The control signaling monitoring method according to any one of claims 1-7, wherein when a preset condition is determined to be met, the target parameter set of the target DRX cycle is switched to a preset parameter set.

12. The control signaling monitoring method according to claim 11, wherein the preset condition is determined to be met when at least one of the following situations is met:
one or more situations of a beam failure recovery, a radio link failure or user equipment out-of-sync occur when sending service data;
preference information is reported to the network device, and the preference information is used to indicate to update the target parameter set to the preset parameter set;
the target indication signaling fails to be received;
a target service data transmission is completed;
a rollback timer expires, and the rollback timer is used to indicate to update the target parameter set to the preset parameter set;
the user equipment receives an RRC reconfiguration message sent by the network device, and the RRC reconfiguration message is used to modify the target parameter set of the target DRX cycle.

13. A control signaling monitoring method, wherein the method is applied to a network device, and the method comprises:
sending first configuration information to a user equipment, wherein the first configuration information is used to determine N groups of candidate parameter sets, wherein N is an integer greater than or equal to 1;
sending indication information to the user equipment, wherein the indication information is used to indicate to obtain a target parameter set of a target DRX from the N groups of candidate parameter sets, and the target parameter is used to determine a control signaling monitoring time.

14. The control signaling monitoring method according to claim 13, wherein the indication information comprises a target indication signaling and/or second configuration information.

15. The control signaling monitoring method according to claim 14, wherein the target indication signaling is at least one of a DCI signaling, a MAC CE signaling or a higher layer signaling.

16. The control signaling monitoring method according to claim 14, wherein the target indication signaling carries at least one of target parameter set indication information, switching indication information or target parameter set index indication information.

17. The control signaling monitoring method according to claim 14, wherein the second configuration information comprises a target time interval and/or a service-specific threshold value.

18. The control signaling monitoring method according to claim 17, wherein the target time interval comprises at least one of the following: a timer configured by a higher layer signaling, a time interval associated with a service refreshing rate, or a time interval associated with a radio frame.

19. The control signaling monitoring method according to claim 17, wherein the service-specific threshold value comprises at least one of the following: a threshold value for a quantity of received service data packets or a threshold value corresponding to a time interval between received service data packets.

20. The control signaling monitoring method according to any one of claims 13-19, further comprising:
determining the first configuration information according to an original DRX cycle of the user equipment, wherein the first configuration information comprises: N groups of candidate parameter sets or a related parameter of N groups of candidate parameter sets, and the related parameter is used to determine the N groups of candidate parameter sets.

21. A control signaling monitoring apparatus, wherein the apparatus is applied to a user equipment, and the apparatus comprises:
a receiving module, configured to receive first configuration information sent by a network device, wherein the first configuration information is used to determine N groups of candidate parameter sets, wherein N is an integer greater than or equal to 1;
an obtaining module, configured to obtain a target parameter set of a target DRX from the N groups of candidate parameter sets according to indication information sent by the network device, wherein the target parameter set is used to determine a control signaling monitoring time.

22. A control signaling monitoring apparatus, wherein the apparatus is applied to a network device, and the apparatus comprises:
a sending module, configured to send first configuration information to a user equipment, wherein the first configuration information is used to determine N groups of candidate parameter sets, wherein N is an integer greater than or equal to 1; send indication information to the user equipment, wherein the indication information is used to indicate to obtain a target parameter set of a target DRX from the N groups of candidate parameter sets, and the target parameter is used to determine a control signaling monitoring time.

23. A user equipment, comprising:
a memory, configured to store a computer program;
a transceiver, configured to send and receive data under control of a processor;
the processor, configured to read the computer program in the memory and perform the following operations:
receiving first configuration information sent by a network device, wherein the first configuration information is used to determine N groups of candidate parameter sets, wherein N is an integer greater than or equal to 1;
obtaining a target parameter set of a target DRX from the N groups of candidate parameter sets according to indication information sent by the network device, wherein the target parameter set is used to determine a control signaling monitoring time.

24. The user equipment according to claim 23, wherein the indication information comprises a target indication signaling and/or second configuration information.

25. The user equipment according to claim 24, wherein the target indication signaling is at least one of a DCI signaling, a MAC CE signaling or a higher layer signaling.

26. The user equipment according to claim 24, wherein the target indication signaling carries at least one of target parameter set indication information, switching indication information or target parameter set index indication information.

27. The user equipment according to claim 24, wherein the second configuration information comprises a target time interval and/or a service-specific threshold value.

28. The user equipment according to claim 27, wherein the target time interval comprises at least one of the following: a timer configured by a higher layer signaling, a time interval associated with a service refreshing rate, or a time interval associated with a radio frame.

29. The user equipment according to claim 27, wherein the service-specific threshold value comprises at least one of the following: a threshold value for a quantity of received service data packets or a threshold value corresponding to a time interval between received service data packets.

30. The user equipment according to any one of claims 23-29, wherein the obtaining the target parameter set of the target DRX from the N groups of candidate parameter sets comprises:
determining at least one target DRX cycle according to the target parameter set;
determining a target parameter set of the at least one target DRX cycle.

31. The user equipment according to any one of claims 23-29, wherein the target parameter set comprises M target parameters, and the M target parameters at least comprise a DRX cycle time offset value.

32. The user equipment according to any one of claims 23-29, wherein the first configuration information comprises: N groups of candidate parameter sets or a related parameter of N groups of candidate parameter sets, and the related parameter is used to determine the N groups of candidate parameter sets.

33. The user equipment according to any one of claims 23-29, wherein when a preset condition is determined to be met, the target parameter set of the target DRX cycle is switched to a preset parameter set.

34. The user equipment according to claim 33, wherein the preset condition is determined to be met when at least one of the following situations is met:
one or more situations of a beam failure recovery, a radio link failure or user equipment out-of-sync occur when sending service data;
preference information is reported to the network device, and the preference information is used to indicate to update the target parameter set to the preset parameter set;
the target indication signaling fails to be received;
a target service data transmission is completed;
a rollback timer expires, and the rollback timer is used to indicate to update the target parameter set to the preset parameter set;
the user equipment receives a RRC reconfiguration message sent by the network device, and the RRC reconfiguration message is used to modify the target parameter set of the target DRX cycle.

35. A network device, comprising:
a memory, configured to store a computer program;
a transceiver, configured to send and receive data under control of a processor;
the processor, configured to read the computer program in the memory and perform the following operations:
sending first configuration information to a user equipment, wherein the first configuration information is used to determine N groups of candidate parameter sets, wherein N is an integer greater than or equal to 1;
sending indication information to the user equipment, wherein the indication information is used to indicate to obtain a target parameter set of a target DRX from the N groups of candidate parameter sets, and the target parameter is used to determine a control signaling monitoring time.

36. The network device according to claim 35, wherein the indication information comprises a target indication signaling and/or second configuration information.

37. The network device according to claim 36, wherein the target indication signaling is at least one of a DCI signaling, a MAC CE signaling or a higher layer signaling.

38. The network device according to claim 36, wherein the target indication signaling carries at least one of target parameter set indication information, switching indication information or target parameter set index indication information.

39. The network device according to claim 36, wherein the second configuration information comprises a target time interval and/or a service-specific threshold value.

40. The network device according to claim 39, wherein the target time interval comprises at least one of the following: a timer configured by a higher layer signaling, a time interval associated with a service refreshing rate, or a time interval associated with a radio frame.

41. The network device according to claim 39, wherein the service-specific threshold value comprises at least one of the following: a threshold value for a quantity of received service data packets or a threshold value corresponding to a time interval between received service data packets.

42. The network device according to any one of claims 35-41, wherein the processor is further configured to perform the following operations:
determining the first configuration information according to an original DRX cycle of the user equipment, wherein the first configuration information comprises: N groups of candidate parameter sets or a related parameter of N groups of candidate parameter sets, and the related parameter is used to determine the N groups of candidate parameter sets.

43. A processor-readable storage medium, wherein the processor-readable storage medium stores a computer program, and the computer program is used to cause a processor executing the control signaling monitoring method according to any one of claims 1-20.

44. A computer program product, comprising: a computer program, wherein when the computer program is executed by a processor, the control signaling monitoring method according to any one of claims 1-20 is implemented.
